Europäisches Patentamt

European Patent Office

Office européen des brevets

(19)

(11) Veröffentlichungsnummer: **0 253 967 B1**

## EUROPÄISCHE PATENTSCHRIFT

(45) Veröffentlichungstag der Patentschrift: 24.07.91

(51) Int. Cl.⁵: **B60R 19/04, B60R 19/50**

(21) Anmeldenummer: 87106393.9

(22) Anmeldetag: 02.05.87

(54) **Stossfänger für Fahrzeuge.**

(30) Priorität: 04.07.86 DE 3622483

(43) Veröffentlichungstag der Anmeldung:
27.01.88 Patentblatt 88/04

(45) Bekanntmachung des Hinweises auf die
Patenterteilung:
24.07.91 Patentblatt 91/30

(84) Benannte Vertragsstaaten:
**DE FR GB IT**

(56) Entgegenhaltungen:
**EP-A- 0 150 636**
**DE-A- 2 838 572**
**FR-A- 2 380 167**
**FR-A- 2 565 538**

(73) Patentinhaber: **Dr.Ing.h.c. F. Porsche Aktiengesellschaft**
**Porschestrasse 42**
**W-7000 Stuttgart 40(DE)**

(72) Erfinder: **Peter, Dietmar**
**Graf-Stauffenberg-Strasse 11**
**W-7251 Hemmingen(DE)**

## Beschreibung

Die Erfindung bezieht sich auf einen Stoßfänger für Fahrzeuge, insbesondere Personenwagen, mit einem formsteifen Träger und einer elastischen, den Endbereich des Aufbaus bildenden Abdeckung, die mit Abstand zum Träger verläuft und örtlich am Aufbau befestigt ist, wobei vorzugsweise in einem mittleren Bereich der Abdeckung eine Nische zur Aufnahme eines Kennzeichenschildes vorgesehen ist.

Bei einem bekannten Stoßfänger der eingangs genannten Gattung (DE-A-2 838 572) ist eine relativ großflächige, den Endbereich des Aufbaus bildende Abdeckung einteilig ausgebildet und unter Vermittlung von schraubbaren Befestigungselementen mit dem Aufbau verbunden.

Anderseits ist aus dem Dokument FR-A-2 380 167 ein Fahrzeug mit einem an der Frontseite angeordneten Stoßfänger bekannt, der aus einem Mittelteil und zwei seitlichen Eckteilen besteht. Alle drei Teile des Stoßfängers sind voneinander am angrenzenden Fahrzeugkörper befestigt.

Da in verschiedenen Ländern differenzierte gesetzliche Forderungen bezüglich der Kennzeichengröße, des Kennzeichenabstandes zur Fahrbahn und der Kennzeichenausleuchtung existieren, werden für ein Fahrzeugmodell zur Erfüllung aller dieser Forderungen mehrere unterschiedliche Abdeckungen mit entsprechend ausgebildeten Nischen zur Aufnahme des Kennzeichenschildes benötigt. Zur Herstellung dieser unterschiedlichen Abdeckungen sind aufwendige Werkzeuge erforderlich, die hohe Kosten verursachen. Außerdem muß bereits bei einer örtlichen irreparablen Beschädigung der Abdeckung diese komplett ersetzt werden, was teuer ist.

Aufgabe der Erfindung ist es, an einer Abdeckung für einen Stoßfänger solche Vorkehrungen zu treffen, daß die Werkzeugkosten für die Abdeckung unter Berücksichtigung der länderspezifischen Forderungen reduziert werden. Dabei sollte auch sichergestellt sein, daß die Abdeckung eine gute Funktion aufweist, einfach montierbar und reparaturfreundlich ist.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die mehrteilige Ausbildung der Abdeckung die Werkzeugkosten beträchtlich reduziert werden, da wesentlich kleinere und kompaktere Werkzeuge benötigt werden. Ferner wird durch die kleineren Einzelteile der Abdeckung die Montage erleichtert und im Reparaturfall werden die Kosten gesenkt, da jeweils nur die beschädigten Einzelteile erneuert werden müssen.

Durch das austauschbare Mittelteil der Abdeckung wird erreicht, daß den gesetzlichen Forderungen der verschiedenen Länder auf einfache Weise Rechnung getragen werden kann und für alle Länder die gleichen Seitenteile der Abdeckung verwendet werden können. Auch können zumindest Einzelteile der Abdeckung gleichzeitig für mehrere unterschiedliche Fahrzeugtypen verwendet werden. Es besteht die Möglichkeit, daß die Abdeckung für verschiedene Fahrzeugtypen dasselbe Mittelteil, jedoch unterschiedlich ausgebildete Seitenteile aufweist oder umgekehrt.

Durch die Befestigung des Mittelteiles am Träger wird erreicht, daß bei einem Mittenaufprall nur das Mittelteil der Abdeckung eine Relativbewegung in Fahrzeuglängsrichtung ausübt; die Seitenteile verbleiben hingegen in ihrer Einbaulage. Dadurch werden Beschädigungen der bogenförmigen Endabschnitte der darüberliegenden Leuchteneinheit vermieden. Bei einem Schrägaufprall auf ein Seitenteil der Abdeckung führt - bedingt durch die formschlüssige Verbindung zwischen dem Seitenteil und dem Mittelteil - die gesamte Abdeckung eine Relativbewegung in Fahrzeuglängsrichtung durch. Die zwischen den Seitenteilen und dem Mittelteil vorgesehenen Führungseinrichtungen bewirken eine definierte Bewegung des Mittelteils und dieses kehrt nach erfolgter Beaufschlagung wieder in seine Ausgangslage zurück.

Ein Ausführungsbeispiel der Erfindung ist in der Zeichnung dargestellt und wird im folgenden näher erläutert.

Es zeigt

Fig. 1      eine Schrägansicht von hinten auf einen Personenwagen mit einem Stoßfänger,

Fig. 2      die Einzelteile des Stoßfängers in schematischer Darstellung,

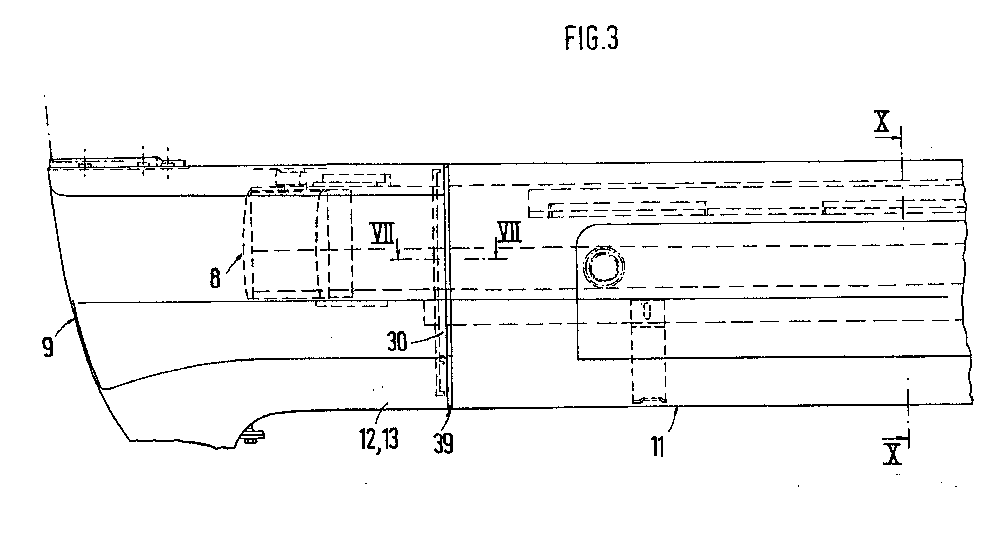

Fig. 3      eine Ansicht in Pfeilrichtung R auf den Stoßfänger,

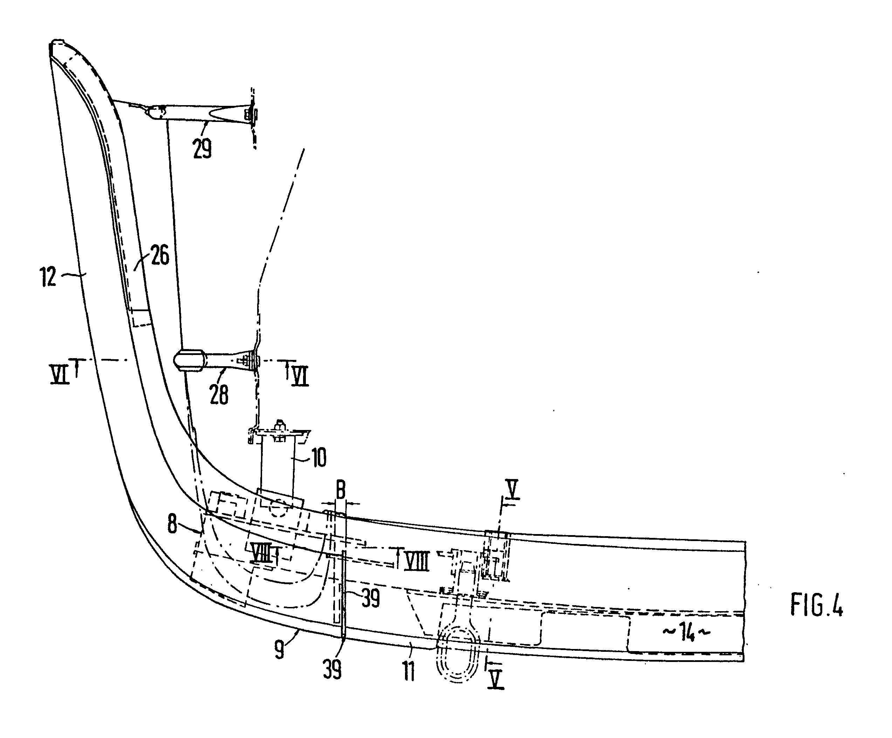

Fig. 4      eine Draufsicht auf den Stoßfänger gemäß Fig. 3,

Fig. 5      einen Schnitt nach der Linie V-V der Fig. 4,

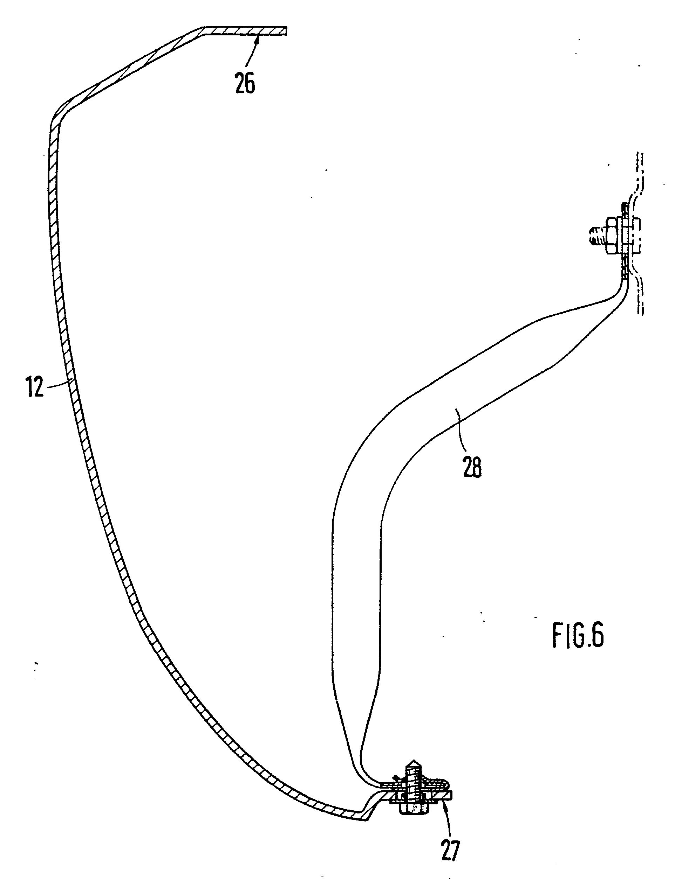

Fig. 6      einen Schnitt nach der Linie VI-VI der Fig. 4,

Fig. 7      einen Schnitt nach der Linie VII-VII der Fig. 3,

Fig. 8      einen Schnitt nach der Linie VIII-VIII der Fig. 4,

Fig. 9      eine Ansicht entsprechend Fig. 1 mit einem anderen Mittelteil,

Fig. 10      einen Schnitt nach der Linie X-X der Fig. 3,

Fig. 11      einen Schnitt entsprechend Fig. 10 eines anderen Mittelteiles.

Der Personenwagen 1 weist im dargestellten Bereich einen Aufbau 2 mit Seitenteilen 3, einer Heckklappe 4, einer Sichtscheibe 5 sowie einer Leuchteneinheit 6 auf. Die Leuchteneinheit 6 erstreckt sich über einen wesentlichen Teil der Breite des Personenwagens und weist bogenförmige Endabschnitte auf, die der Form der Seitenteile 3 angepaßt sind.

Unterhalb der Leuchteneinheit 6 ist der Aufbau 2 mit einem Stoßfänger 7 versehen, der aus einem formsteifen Träger 8 und einer elastischen, den Endbereich des Aufbaues 2 bildenden Abdeckung 9 besteht. Der aus Metall, Kunststoff oder dergleichen hergestellte Träger 8 stützt sich an hydraulischen Dämpfern 10 ab, die am Aufbau 2 befestigt sind; auch andere Dämpfungselemente sind denkbar. Im Querschnitt kann der Träger 8 kastenförmig oder U-profilförmig ausgebildet sein. Die aus Kunststoff, vorzugsweise Schaumstoff (PU-Schaum) bestehende Abdeckung 9 verläuft mit Abstand zum Träger 8 und verkleidet letzteren.

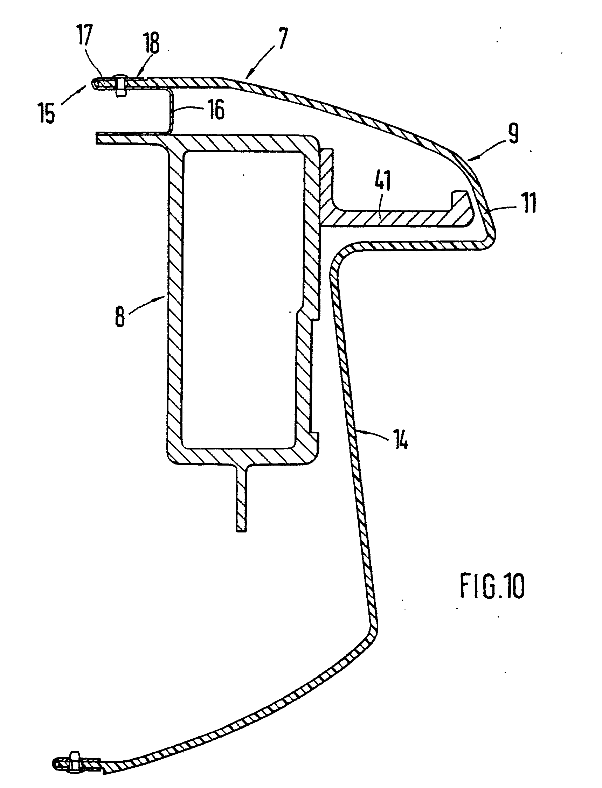

Die Abdeckung 9 umfaßt ein Mittelteil 11 und daran anschließende Seitenteile 12, 13. Das Mittelteil 11 weist in einem mittleren Bereich seiner Quererstreckung eine Nische 14 zur Aufnahme eines nicht näher dargestellten Kennzeichenschildes auf und ist lediglich am formsteifen Träger 8 in Lage gehalten. Die Befestigung des Mittelteiles 11 erfolgt unter Vermittlung von Halteelementen 15. Das oberhalb des formsteifen Trägers 8 angeordnete Halteelement wird durch eine in Fahrzeugquerrichtung verlaufende Schiene 16 gebildet, die sich am formsteifen Träger 8 abstützt und ein freies Ende 17 der Abdeckung 9 aufnimmt. Das freie Ende 17 ragt in einen U-förmigen Abschnitt 18 der Schiene 16 hinein und ist dort durch Kleben, Schrauben, Nieten oder dergleichen mit der Schiene verbunden (Fig. 10). Die Schiene 16 weist etwa die Breite des formsteifen Trägers 8 auf und ist im Querschnitt etwa U-förmig profiliert, wobei die offene Seite dem Aufbau 2 zugekehrt ist.

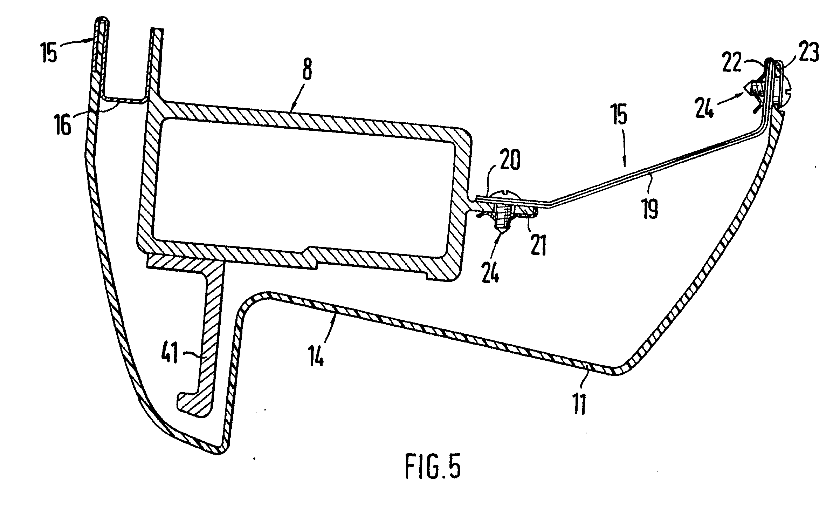

Ein unterhalb des formsteifen Trägers 8 angeordnetes Halteelement 15 wird durch ein winkelförmiges Stützglied 19 gebildet. Ein Endbereich 20 des Stützgliedes 19 ist mit einem vertikalen Steg 21 des Trägers 8 und der andere Endabschnitt 22 mit einem horizontal ausgerichteten Flansch 23 des Mittelteiles 11 über lösbare Befestigungselemente 24 verbunden (Fig. 5).

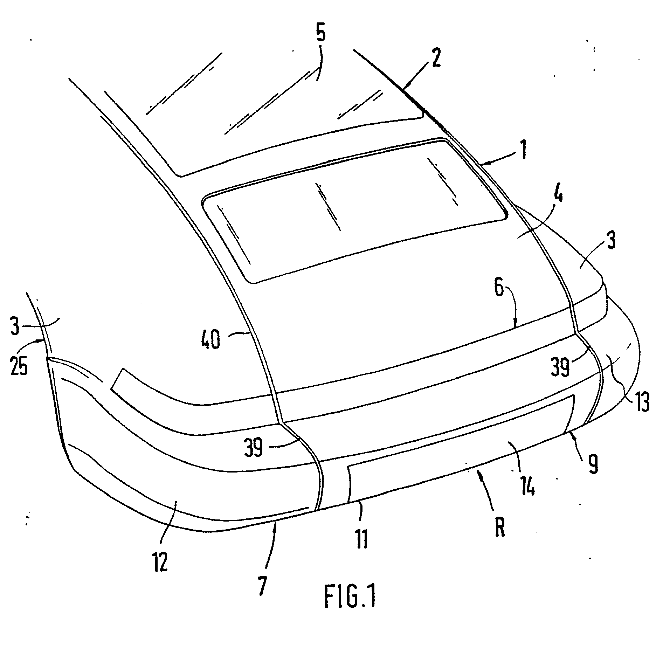

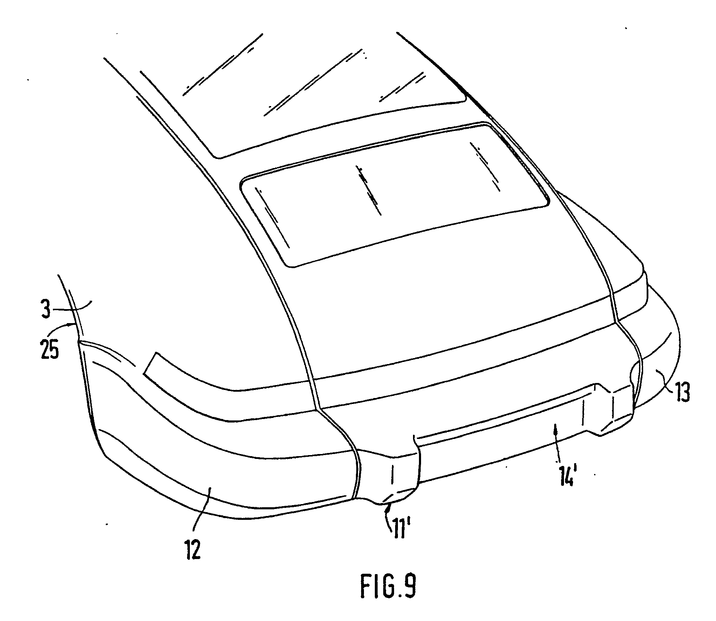

Das Mittel 11 der Abdeckung 9 weist etwa die Breite der darüberliegend angeordneten Heckklappe 4 auf (Fig. 1 und 9).

Die beiden Seitenteile 12, 13 sind bogenförmig um den Aufbau 2 herumgeführt und erstrecken sich bis zu angrenzenden Radausschnitten 25. Das Mittelteil 11 ist mit den beiden Seitenteilen 12, 13 - in Fahrzeugquerrichtung gesehen -formschlüssig verbunden; in Fahrzeuglängsrichtung ist das Mittelteil 11 jedoch relativ zu den Seitenteilen 12, 13 bewegbar.

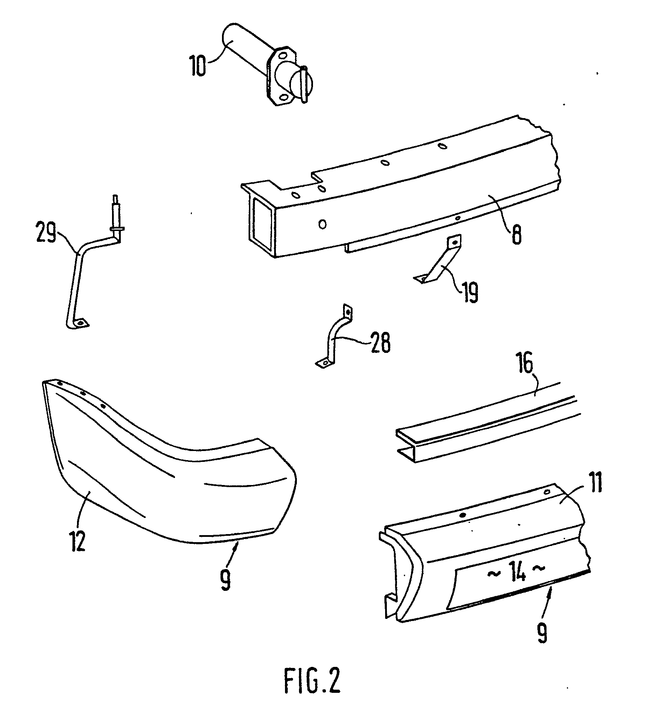

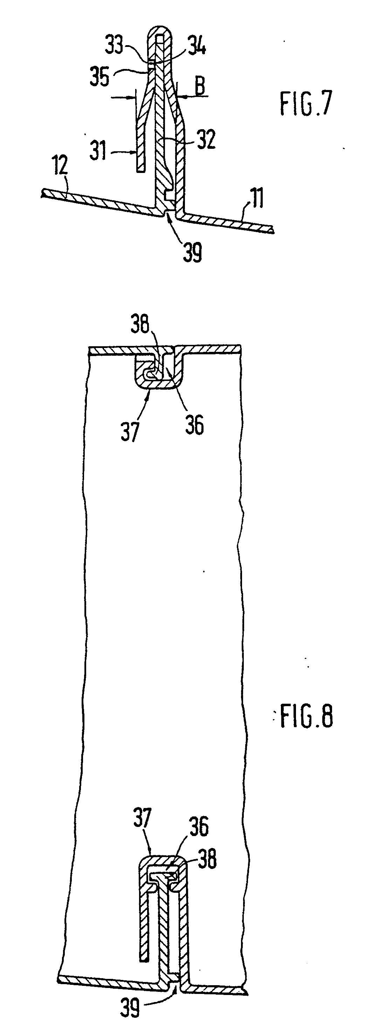

Gemäß Fig. 2 sind die beiden Seitenteile 12, 13 fest mit dem Aufbau 2 verbunden. Ein oberer Randbereich 26 der Seitenteile 12, 13 ist am angrenzenden Aufbau 2 unter Vermittlung von nicht näher dargestellten, schraubbaren Befestigungselementen in Lage gehalten. Zur Befestigung eines unteren Randbereiches 27 der Seitenteile 12, 13 sind bei 28 und 29 Halter vorgesehen, die am Aufbau 2 befestigt sind. Die beiden Seitenteile 12, 13 der Abdeckungen übergreifen das Mittelteil 11 in Fahrzeugquerrichtung gesehen, um einen geringen Betrag (Maß B). Gemaß Fig. 7 sind in einem aufrechten Verbindungsbereich 30 zwischen dem Mittelteil 11 und den Seitenteilen 12, 13 am Mittelteil 11 U-förmige Aufnahmeabschnitte 31 angeformt, in die abgestellte Stege 32 der angrenzenden Seitenteile 12, 13 eingreifen. Zwischen den Seitenteilen 12, 13 und dem Mittelteil 11 ist im aufrechten Verbindungsbereich 30 eine Schnappverbindung 33 vorgesehen. Diese umfaßt einen am Steg 32 angeformten, zylindrischen Nocken 34, der in eine Öffnung 35 des Aufnahmeabschnittes 31 hineinragt.

Damit das Mittelteil 11 bei einem Mittenaufprall eine definierte Bewegung durchführt und danach wieder in seine Ausgangslage zurückkehrt, wirkt das Mittelteil 11 über horizontal ausgerichtete, in Fahrzeuglängsrichtung verlaufende Führungseinrichtungen 36 mit den Seitenteilen 12, 13 zusammen. Die Führungseinrichtungen 36 sind oberhalb und unterhalb des formsteifen Trägers 8 vorgesehen. Jede Führungseinrichtung 36 umfaßt eine am Mittelteil 11 ausgebildete Führungsschiene 37, in die ein Halteabschnitt 38 des Seitenteiles 12, 13 eingreift. Die Führungsschienen 37 verlaufen in Verlängerung des Aufnahmeabschnittes 31 und sind im Querschnitt etwa U-förmig profiliert. Der Halteabschnitt 38 ist endseitig am Steg 32 der Seitenteile 12, 13 angeformt und T-förmig oder L-förmig profiliert.

Eine im aufrechten und teilweise im oberen Bereich der Abdeckung 9 verlaufenden Fuge 39 zwischen dem Mittelteil 11 und den Seitenteilen 12, 13 fluchtet mit der zwischen der Heckklappe 4 und dem Aufbau 2 sich erstreckenden Fuge 40.

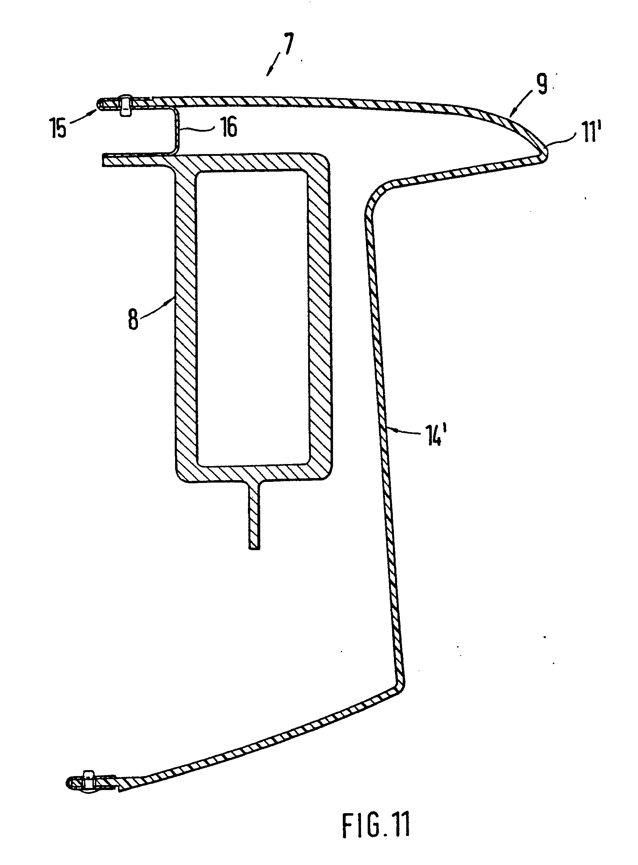

Zur Erfüllung der länderspezifischen Forderungen sind Mittelteile 11, 11' mit identischen Anschlußmaßen, jedoch unterschiedlich ausgebildeten Nischen 14, 14' in die Abdeckung 9 einsetzbar, wogegen für alle Länder dieselben Seitenteile 12, 13 verwendet werden können. Das in Fig. 10 dargestellte Mittelteil 11 weist eine Nische 14 auf, die eine geringere Höhe und eine größere Breite besitzt als die Nische 14' des Mittelteiles 11' gemäß Fig. 11. Ferner unterscheiden sich die beiden Mittelteile 11, 11' in ihrem Formverlauf. Die Anschlußbereiche zu den Halteelementen 15 und zu den angrenzenden Seitenteilen 12, 13 sind jedoch identisch ausgebildet. Oberhalb der Nische 14 des Mittelteiles 11 weist der Träger ein Verstärkungselement 41 auf, das mit dem Träger fest verbunden ist und vom Mittelteil 11 umgeben ist. Es sind aber auch Seitenteile 12, 13 mit identischen Anschlußmaßen, jedoch unterschiedlichem Formverlauf bzw. Abmessungen in die Abdeckung 9 einsetzbar (nicht dargestellt).

**Patentansprüche**

1. Stoßfänger (7) für Fahrzeuge, insbesondere Personenwagen (1), mit einem über hydraulische Dämpfer (10) am dahinterliegenden Aufbau (2) abgestützten formsteifen Träger (8) und einer elastischen, den Endbereich des Aufbaus (2) bildenden Abdeckung (9), die mit Abstand zum Träger (8) verläuft und örtlich am Aufbau (2) befestigt ist, wobei in einen mittleren Bereich der Abdeckung (9) eine Nische (14, 14') zur Aufnahme eines Kennzeichenschildes vorgesehen ist, **dadurch gekennzeichnet,** daß die elastische Abdeckung (9) - in Fahrzeugquerrichtung gesehen - aus mehreren aneinandergesetzten Teilen (Mittelteil 11, 11', Seitenteile 12, 13) besteht, wobei sowohl Mittelteile (11, 11') mit gleichen Anschlußmaßen, jedoch unterschiedlich ausgebildeten Nischen (14, 14') für die Kennzeichenschilder als auch Seitenteile (12, 13) mit identischen Anschlußmaßen jedoch unterschiedlichem Formverlauf in die Abdeckung (9) einsetzbar sind.

2. Stoßfänger nach Anspruch 1, **dadurch gekennzeichnet,** daß das Mittelteil (11, 11') lediglich am formsteifen Träger (8) in Lage gehalten ist.

3. Stoßfänger nach Anspruch 1, **dadurch gekennzeichnet,** daß das Mittelteil (11, 11') unter Zwischenschaltung von Halteelementen (15) mit dem formsteifen Träger (8) verbunden ist.

4. Stoßfänger nach Anspruch 3, **dadurch gekennzeichnet,** daß ein oberhalb des formsteifen Trägers (8) angeordnetes Halteelement (15) für das Mittelteil (11, 11') durch eine in Fahrzeugquerrichtung verlaufende Schiene (16) gebildet wird, die sich am formsteifen Träger (8) abstützt und ein freies Ende (17) der Abdeckung (8) aufnimmt, wobei das freie Ende (17) der Abdeckung (8) durch Kleben, Schrauben, Nieten oder dergleichen mit der Schiene (16) verbunden ist.

5. Stoßfänger nach Anspruch 3, **dadurch gekennzeichnet,** daß ein unterhalb des formsteifen Trägers (8) angeordnete Halteelement (15) durch ein Stützglied (19) gebildet wird, das mit einem Steg (21) des Trägers (18) und einem Flansch (23) der Abdeckung (8) über lösbare Befestigungselemente (24) verbunden ist.

6. Stoßfänger, der benachbart einer Heckklappe angeordnet ist, nach Anspruch 1, **dadurch gekennzeichnet,** daß das Mittelteil (11, 11') der Abdeckung (9) etwa die Breite der Heckklappe (4) aufweist.

7. Stoßfänger nach Anspruch 1, **dadurch gekennzeichnet,** daß die beiden Seitenteile (12, 13) der Abdeckung (9) das Mittelteil (11, 11') - in Fahrzeugquerrichtung gesehen - übergreifen.

8. Stoßfänger nach Anspruch 1, **dadurch gekennzeichnet,** daß das Mittelteil (11, 11') - in Fahrzeuglängsrichtung gesehen - relativbeweglich zu den Seitenteilen (12, 13) gelagert ist.

9. Stoßfänger nach Anspruch 1, **dadurch gekennzeichnet,** daß das Mittelteil (11, 11') an seinen an die Seitenteile (12, 13) herangeführten Anschlußbereichen mit Aufnahmeabschnitten (31) versehen ist, in die abgestellte Stege (32) der angrenzenden Seitenteile (12, 13) eingreifen.

10. Stoßfänger nach Anspruch 9, **dadurch gekennzeichnet,** daß zwischen dem Aufnahmeabschnitt (31) und dem Steg (32) eine Schnappverbindung (33) vorgesehen ist.

11. Stoßfänger nach Anspruch 10, **dadurch gekennzeichnet,** daß die Schnappverbindung (33) einen am Steg (32) angeformten Nocken (34) umfaßt, der in eine Öffnung (35) des Aufnahmeabschnittes (31) hineinragt.

12. Stoßfänger nach Anspruch 1, **dadurch gekennzeichnet,** daß das Mitteteil (11) über horizontal ausgerichtete, in Fahrzeuglängsrichtung verlaufende Führungseinrichtungen (36) mit den Seitenteilen (12, 13) verbunden ist.

13. Stoßfänger nach Anspruch 12, **dadurch gekennzeichnet,** daß die Führungseinrichtungen (36) oberhalb und unterhalb des formsteifen Trägers (8) an der Abdeckung (9) vorgesehen sind.

14. Stoßfänger nach Anspruch 12, **dadurch ge-**

kennzeichnet, daß jede Führungseinrichtung (36) durch eine am Mittelteil (11) angeordnete Führungsschiene (37) und einen Halteabschnitt (38) des Seitenteils (12, 13) gebildet wird, wobei der Halteabschnitt (38) in die Führungsschiene (37) eingreift.

15. Stoßfänger nach Anspruch 1, **dadurch gekennzeichnet**, daß eine im aufrechten Verbindungsbereich (30) der Abdeckung (9) zwischen Mittelteil (11) und Seitenteil (12, 13) angeordnete Fuge (39) in Verlängerung der zwischen der Heckklappe und dem Aufbau sich erstreckenden Fuge (40) verläuft.

## Claims

1. A bumper (7) for vehicles, in particular passenger cars (1), having a dimensionally stable carrier member (8), supported by way of hydraulic dampers (10) on the body (2) behind it, and a resilient covering (9) forming the end region of the body (2) and extending for a distance from the carrier member (8) and secured locally to the body (2), a recess (14, 14') for receiving a number plate being provided in a central region of the covering (9), characterized in that the resilient covering (9) - as viewed in the transverse direction of the vehicle - contains a plurality of adjacent parts (middle part 11, 11', lateral parts 12, 13), both the middle parts (11, 11') with the same fitting dimensions but differently constructed recesses (14, 14') for the number plates and the lateral parts (12, 13) with identical fitting dimensions but a different shape being insertable into the covering (9).

2. A bumper according to Claim 1, characterized in that the middle part (11, 11') is held in position solely on the dimensionally stable carrier member (8).

3. A bumper according to Claim 1, characterized in that the middle part (11, 11') is connected to the dimensionally stable carrier member (8) with the interposition of holding members (15).

4. A bumper according to Claim 3, characterized in that a holding member (15) - arranged above the dimensionally stable carrier member (8) - for the middle part (11, 11') is formed by a rail (16) extending in the transverse direction of the vehicle and supported on the dimensionally stable carrier member (8) and receiving a free end (17) of the covering (8) [*sic*], the free end (17) of the covering (8) being joined to the rail (16) by adhesion, screwing, riveting or the like.

5. A bumper according to Claim 3, characterized in that a holding member (15) - arranged below the dimensionally stable carrier member (8) - is formed by a support member (19) connected to a web (21) of the carrier member (18) [*sic*] and a flange (23) of the covering (8) by way of releasable fastening members (24).

6. A bumper, arranged adjacent to a tail flap, according to Claim 1, characterized in that the middle part (11, 11') of the covering (9), is substantially the same width as the tail flap (4).

7. A bumper according to Claim 1, characterized in that the two lateral parts (12, 13) of the covering (9) engage over the middle part (11, 11') as viewed in the transverse direction of the vehicle.

8. A bumper according to Claim 1, characterized in that the middle part (11, 11') is mounted so as to be movable relative to the lateral parts (12, 13) as viewed in the longitudinal direction of the vehicle.

9. A bumper according to Claim 1, characterized in that the middle part (11, 11') is provided at, its attachment areas brought up to the lateral parts (12, 13), with receiving portions (31) in which angled webs (32) of the adjacent lateral parts (12, 13) engage.

10. A bumper according to Claim 9, characterized in that a snap connexion (33) is provided between the receiving portion (31) and the web (32).

11. A bumper according to Claim 10, characterized in that the snap connexion (33) comprises a stud (34) integrally moulded on the web (32) and projecting into an opening (35) in the receiving portion (31).

12. A bumper according to Claim 1, characterized in that the middle part (11) is connected to the lateral parts (12, 13) by way of guide devices (36) orientated horizontally and extending in the longitudinal direction of the vehicle.

13. A bumper according to Claim 12, characterized in that the guide devices (36) are provided above and below the dimensionally stable carrier member (8) on the covering (9).

14. A bumper according to Claim 12, characterized in that each guide device (36) is formed by a guide rail (37) arranged on the middle part (11) and by a holding portion (38) of the lateral part (12, 13), the holding portion (38) engaging in the guide rail (37).

15. A bumper according to Claim 1, characterized in that a join (39) provided in the upright connexion area (30) of the covering (9) between the middle part (11) and the lateral part (12, 13) extends as an extension of the join (40) extending between the tail flap and the body.

## Revendications

1. Pare-choc (7) pour véhicules, en particulier voitures particulières (1), avec un support de forme rigide (8), prenant appui par l'intermédiaire d'amortisseurs hydrauliques (10) sur la carrosserie (2) se trouvant derrière, et un recouvrement élastique (9) formant la zone d'extrémité de la carrosserie (2) et s'étendant à distance du support (8) et fixé localement sur la carrosserie (2), une niche (14,14'), servant à recevoir une plaque d'identification minéralogique, étant disposée dans une zone centrale du recouvrement (9), caractérisé en ce que le recouvrement élastique (9) - observé en direction transversale du véhicule - se compose de plusieurs parties (partie médiane 11,11', parties latérales 12,13) placées les unes contre les autres, tant les parties médianes (11,11') avec des dimensions de raccordement identiques, les niches (14,14') destinées à l'identification minéralogique étant cependant différentes, qu'également les parties latérales (12,13) étant susceptibles d'être positionnées dans le recouvrement (9), avec des dimensions de raccordement identiques, mais cependant avec un profil de forme différent.

2. Pare-choc selon la revendication 1, caractérisé en ce que la partie médiane (11,11') est maintenue en position uniquement sur le support à forme rigide (8).

3. Pare-choc selon la revendication 1, caractérisé en ce que la partie médiane (11,11') est reliée au support de forme rigide (8), par l'intermédiaire d'éléments de maintien (15).

4. Pare-choc selon la revendication 3, caractérisé en ce qu'un élément de maintien (15), disposé au-dessus du support de forme rigide (8) et destiné à la partie médiane (11,11'), est formé par un profilé (16), qui s'étend transversalement à la direction du véhicule, prend appui sur le support de forme rigide (8) et reçoit une extrémité libre (17) du recouvrement (8), l'extrémité libre (17) du recouvrement (8) étant reliée au profilé (16), par collage, vissage, rivetage ou analogue.

5. Pare-choc selon la revendication 3, caractérisé en ce qu'un élément de maintien (15), disposé au-dessous du support de forme rigide (8), est formé par un organe d'appui (19), qui est relié à une nervure (21) du support (18) et à un rebord (23) du recouvrement (8), par des éléments de fixation amovibles (24).

6. Pare-choc disposé au voisinage d'un capot arrière, selon la revendication 1, caractérisé en ce que la partie médiane (11,11') du recouvrement (9) présente à peu près la largeur du capot arrière (4).

7. Pare-choc selon la revendication 1, caractérisé en ce que, vues en direction transversale du véhicule, les deux parties latérales (12,13) du recouvrement (9) entourent la partie médiane (11,11').

8. Pare-choc selon la revendication 1, caractérisé en ce que, vue en direction transversale du véhicule, la partie médiane (11,11') est montée mobile par rapport aux parties latérales (12,13).

9. Pare-choc selon la revendication 1, caractérisé en ce que, sur ses zones de raccordement approchées des parties latérales (12,13), la partie médiane (11,11') est pourvue de section de réception (31) dans lesquelles s'engagent des nervures de butée (32) des parties latérales (12,13) limitrophes.

10. Pare-choc selon la revendication 9, caractérisé en ce qu'une liaison à cliquet (33) est prévue entre la section de réception (31) et la nervure (32).

11. Pare-choc selon la revendication 10, caractérisé en ce que la liaison à cliquet (33) comprend un ergot (34), formé d'une seule pièce sur la nervure (32), qui pénètre dans une ouverture (35) de la section de réception (31).

12. Pare-choc selon la revendication 1, caractérisé en ce que la partie médiane (11) est reliée aux parties latérales (12,13) par l'intermédiaire de dispositifs de guidage (36) horizontaux, s'étendant en direction longitudinale du véhicule.

13. Pare-choc selon la revendication 12, caractérisé en ce que les dispositifs de guidage (36) sont prévus, sur le recouvrement (9), au-dessus et au-dessous du support de forme rigide
(8).

14. Pare-choc selon la revendication 12, caractérisé en ce que chaque dispositif de guidage (36) est formé par un profilé de guidage (37) disposé sur la partie médiane (11) et une section de maintien (38) de la partie latérale (12,13), la section de maintien (38) venant en contact sur le profilé de guidage (37).

15. Pare-choc selon la revendication 1, caractérisé en ce qu'un joint (39), disposé dans la zone de liaison verticale (30) du recouvrement (9), entre partie médiane (11) et partie latérale (12,13), s'étend dans le prolongement du joint (40) qui s'étend entre le capot arrière et la carrosserie.

FIG.1

FIG.2

# FIG.3

EP 0 253 967 B1

FIG.4

FIG.5

FIG.6

FIG.7

FIG.8

FIG.9

FIG.10

FIG.11